# EUROPEAN PATENT APPLICATION

(11) **EP 2 779 009 A2**
(43) Date of publication of application: **17.09.2014**
(21) Application number: 14159623.9
(22) Date of filing: 13.03.2014
(51) Int. Cl.: G06F 21/10

(54) **Code-enabled remote activation of software for industrial automation systems**

(30) Priority: 13.03.2013 US 201313799054
(71) Applicant: Rockwell Automation Technologies, Inc., Mayfield Heights, OH 44124 (US)
(72) Inventor: Axel Rodriguez, OH, 44202 Aurora (US); Alex Llyod Kumnick, OH, 44023 Chagrin Falls (US); Timothy S. Odgen, WI, 534018 Delafield (US)
(74) Representative: Grünecker, Kinkeldey, Stockmair & Schwanhäusser

(57) **Abstract**

Systems, methods, and software for enabling software for industrial automation systems and equipment are provided wherein. In one example, a non-transitory computer readable medium having stored thereon program instructions executable by a computing device is presented. When executed by the computing device, the program instructions direct the computing device to receive a request for enabling use of software for an industrial control device, identify a code capable of enabling the software based at least in part on the request, and communicate the code to a user to use to enable the software for the industrial control device.

## Description

### TECHNICAL FIELD

Aspects of the disclosure are related to the field of industrial automation, and in particular, to software, hardware systems, and methods for remote enablement of software and hardware for industrial control systems, devices, and equipment.

### TECHNICAL BACKGROUND

Industrial automation environments can include various machine systems, industrial automation devices and software, and industrial processes, such as those found in factories, milling operations, manufacturing facilities, and the like. These machine systems and industrial automation devices typically include an operation or process implemented by a mechanical or electrical device. Specific examples of these devices and systems can include various functions of machinery associated with industrial automation including manufacturing equipment, assembly equipment, milling equipment, process equipment, and packaging equipment, or other machine systems.

Prior to installation and active service of many of these industrial automation devices and systems, companies may design, program, and build the machine at a remote location from the industrial site where the system is to be installed and operate. The controls may be programmed and acceptance tested at the remote location prior to installation.

After installation the industrial control system may need to be modified or serviced. The industrial site may not have the capability to change the programming (configuration and/or application code) of the industrial control system. Furthermore, the industrial site may not have an Internet or wireless connection at or near the equipment or the industrial device within the facility or the facility may be located in a remote geographic region that does not have internet connection.

### OVERVIEW

Systems, methods, and software for enabling software for industrial automation systems and equipment are provided herein. This includes the configuration and design software and runtime software. In one example, a non-transitory computer readable medium having stored thereon program instructions executable by a computing device is presented. When executed by the computing device, the program instructions direct the computing device to receive a request for enabling use of software for an industrial control device, identify a code capable of enabling the software or hardware functionality based at least in part on the request, and communicate the code to a user to use to enable the software for the industrial control device. The code can be generated based at least in part on the characteristics of the computer systems and/or a combination of the computer system and the control system associated.

In another example, a method of enabling software for use with an industrial automation system is presented. The method includes receiving a request for enabling use of software for an industrial control device, identifying an enablement/activation code capable of activating the software or hardware based at least in part on the request, and communicating the enablement/activation code to a user to use to enable the software for the industrial control device.

In another example, a non-transitory computer readable medium having stored thereon program instructions executable by a computing device is presented. When executed by the computing device, the program instructions direct the computing device to connect to an industrial control device, receive an enablement code related to enabling software for the industrial control device, authenticate the enablement code by the computer; and enable software for use with the industrial control device based at least in part on the authentication of the enablement code.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 is a system environment for enabling software for use with an industrial control system, according to an embodiment.
Figure 2 is a communication diagram illustrating communication within a software enablement system, according to an embodiment.
Figure 3 is a system diagram illustrating an example computing system capable of operating a software enablement system for an industrial control environment.
Figure 4 is an example method flow diagram illustrating operation of a software enablement system for an industrial control environment.
Figure 5 is an example method flow diagram illustrating operation of a software enablement system for an industrial control environment.

### DETAILED DESCRIPTION

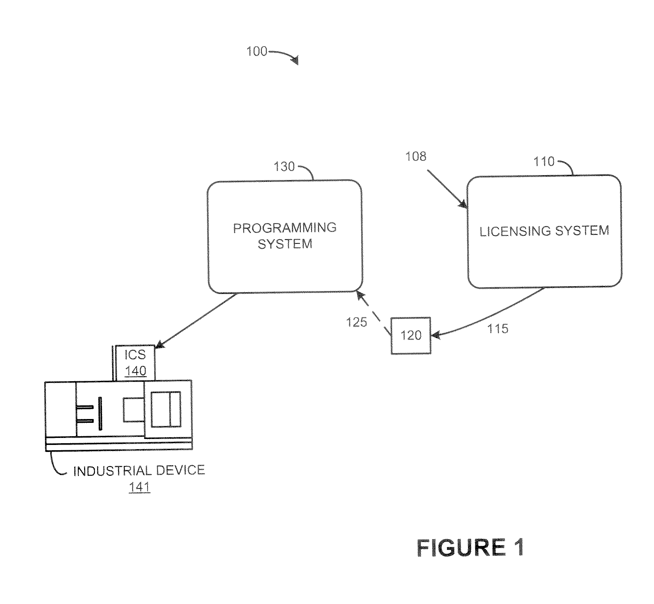

Figure 1 is a system diagram illustrating remote software enabling environment 100. Remote software enabling environment 100 includes licensing and/or activation system 110, programming or configuration system 130, industrial control system (ICS) 140, industrial device 141, and another device 120.

Industrial device 141 is controlled by ICS 140. ICS 140 may include hardware, computers, software, and/or programming specially designed to control industrial device 141. Industrial device 141 may be installed in an industrial plant or facility. The construction, design, and programming of ICS 140 and industrial device 141 may have been accomplished in another facility away from the industrial site where the equipment is installed, such as an integration site.

Long after the industrial device 141 and ICS 140 are installed and operational, changes may need to be made to the programming of ICS 140. This may be difficult to accomplish as the personnel at the industrial site may not have the software activated, means to be able to use the software, or an Internet connection to accomplish the needed changes.

Programming software may be installed but dormant, on ICS 140 and/or programming system 130, which may be capable of changing the programming of ICS 140 and/or programming system 130. A request and/or code 108 may be sent to licensing system 110 requesting an activation code to enable the dormant software. Request 108 may be generated by the ICS 140 and/or programming system 130 and transmitted via Internet, or other means, including device 120.

Request 108 may also include other information about the system including type and number of ICSs 140, type and number of industrial devices 141, customer, application, integrator, original manufacturer, original programmer, system characteristics, hardware component IDs, a code which includes information regarding the above, etc. Licensing system 110 may then identify, or create a code which, when entered in programming system 130 and/or ICS 140, will enable the dormant software, and communicate the code 115 to other device 120.

In this example, licensing and/or activation system 110 and programming system 130 may not be communicatively linked, such as by the Internet or other system. However, licensing system 110 and device 120 may be communicatively linked via the Internet or other communication system. The code may be communicated to other device 120 via email, text message, short message service, extended message service, multimedia message service, enhanced message service, test message service, and/or via a mobile or other telephone, and/or any other method or system, and/or combinations thereof.

The activation code may then be entered or otherwise transferred 125 to programming system 130 and/or ICS 140. The activation code may then be authenticated at programming system 130 and/or ICS 140, and based on a positive authentication, the dormant software may be enable to allow programming or other changes to ICS 140.

In an example, ICS 140 and industrial device 141 may be an automated industrial system. ICS 140 and industrial device 141 may have been manufactured, programmed, and assembled at an integrator/manufacturer, then shipped to the industrial site and installed and started up. Typically the installed system is debugged and put into operation. Some time later, the process or programming may need to be changed. The industrial site may not have Internet or other communication access at the industrial device 141, or may not have the required software for programming the system.

Personnel at the industrial site may then generate a request code for an activation code from the licensing system 110 to allow the use of the dormant programming software installed on the programming system and/or the ICS 140. The licensing system 110 may then provide an activation code to enable the use of the software for a period of time, or number of uses, limited functionality, etc. to allow the site personnel to use the software on a limited basis.

In this example, licensing system 110, programming or configuration system 130 and other device 120 may include a computing device, such as a personal computer, laptop, tablet computing device, mobile smartphone, server, industrial control device, or other computing device which can receive input and communicate codes. These systems can also include hardware, firmware, and software to accomplish the methods described herein.

Different applications and industries employ industrial device 141 under different operating and environmental conditions, as indicated above. The industry typically indicates the general realm of use for the industrial automation equipment. Example industries include material handling, mining/cement, rubber/plastics, food/beverage, consumer goods, textiles, water/waste water, automotive, oil and gas, and pulp/paper, among other industries, including combinations thereof. The application typically indicates the specific type of function or process used by the industrial automation equipment. Example applications include belt conveyors, chain conveyors, diverters, palletizers, centrifugal fans/pumps, cooling/baking conveyors, positive displacement compressors, hoists, cranes, auger conveyors, ball mills, rotary kilns, induced draft fans, beater type mixers, crushers/pulverizers, extruders, blown film, injection molding, blow molding, screw compressors, center driven winders, sugar centrifuges, punch presses, textile machines, engine/transmission test stands, recirculation fans, compressors, chippers, mixers, flow/pumps, converting, and web handling, including combinations thereof.

Many industrial automation systems include programmable logic controllers (PLCs) to control various devices and processes. In this example, ICS 140 provides control logic for controlling industrial device 141. Industrial device 141 can include an operation or process implemented by a mechanical or electrical device.

Examples of industrial device 141 include various functions of machinery associated with industrial automation including manufacturing equipment, assembly equipment, packaging equipment, milling equipment, presses, hydraulic equipment, industrial vehicles, vats, batch process equipment, tanks, fillers, sorters, scanning equipment, or other machine systems, including combinations thereof. Further examples of industrial device 141 include machine control systems, such as motor power controls, motor control centers, pump power controls, lathe machine speed controls, roller mechanism engagement systems, on/off functions of a manufacturing device, a lift function for a forklift, robotic arms, among other examples. Examples ICS 140 include Rockwell Automation or other industrial automation and information products including operator interfaces, drives, variable frequency drives, motors, I/O modules, programmable controllers, circuit breakers, contactors, motor protectors, energy and power monitors, PowerFlex® drives, servo drives, servo motors, push buttons, signaling devices, relays, timers, switches, or safety devices.

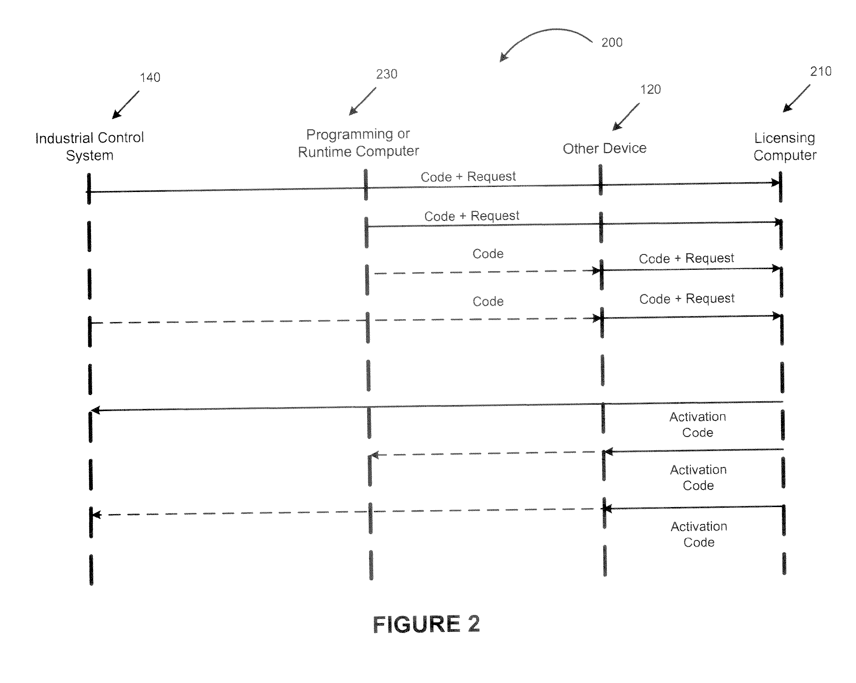

Figure 2 illustrates a communication diagram 200 of a software enabling system 100, according to an example. In Figure 2 the dashed lines indicate a manual operation, and a solid line indicates communication via a communication link, such as the Internet, etc. A request is sent from device 120 to licensing computer 210. The request may include a code generated at or about the system as well as other information about industrial control system 140 and the customer.

The request and code may originate, and may be created and sent in different manners. As shown in the example in Fig. 2, the code and request may originate and be sent from the industrial control system 140 to the licensing computer 210. The code may originate at the industrial control system 140 and be manually entered in the other device 120, then combined with a request and transmitted via a communication link to the licensing computer 210.

The code and request may originate and be sent from the programming or runtime computer 230 to the licensing computer 210. The code may originate at the programming or runtime computer 230 and be manually entered into the other device 120, combined with a request, and sent from the other device 120 to the licensing computer 210.

The licensing system then identifies or creates an activation code which enables the software on programming computer and/or ICS 140. There may be many different ways to identify or generate and track codes used by the system and/or the customer. The codes may be included with the software when installed at the industrial site, or at another time or place. The licensing computer 210 may keep track of which codes are used, how many codes are used, etc.

Once identified, the activation code may be communicated to device 120. In this example, device 120 is a cellular telephone capable of communicating via the Internet to the licensing computer 210. However, device 120 is typically not capable of programming the ICS 140, or communicating with programming computer 230.

The activation code may get to the remote system in many ways, including those shown in the example of Fig. 2. The activation code may be sent via a communication link from the licensing computer 210 to the industrial control system 140. The activation code may be sent from the licensing computer 210 to the other device 120 via a communication link, and then manually entered into the programming or runtime computer 230. Furthermore, the activation code may be sent from the licensing computer 210 to the other device 120 via a communication link, and then manually entered into the industrial control system 140. It will be appreciated that other systems and methods of creating, transmitting, requesting, entering, and identifying may be used with straying from the spirit and scope of this disclosure.

The activation code may be entered into programming computer 230. Once the code is authenticated, the software may be activated, enabled, or otherwise made useable. The programming computer 230 may then be able to program ICS 140. Alternatively, the activation code may be passed on to the ICS 140 for authentication either by the user or the programming computer 230, and software on ICS 140 may be authenticated and enabled.

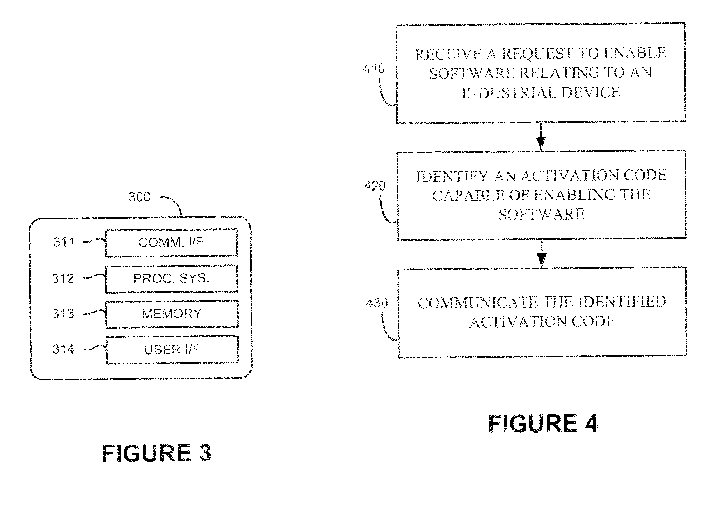

Figure 3 is a system diagram illustrating remote software enabling system 300. Remote software enabling system 300 includes communication interface 311, processing system 312, memory 313, and user interface 314. In this example, user interface 314 may present graphical user interface. In operation, processing system 312 is operatively linked to communication interface 311, memory 313, and user interface 314. Processing system 312 is capable of executing software stored in memory 313. When executing the software, processing system 312 drives remote software enabling system 300 to operate as described herein. It will be appreciated that system 300 can be used to enable computer 130, and/or licensing computer 110, or portions of any of these systems.

Figure 4 is a flow diagram illustrating a method of operation of licensing system 110. The operations of Figure 4 are referenced herein parenthetically. In Figure 4, licensing system 110 receives (410) a request to enable software relating to an industrial device. The request may come from a computer operated by the customer, or other method or system.

Request may also be accompanied by a system code created at the ICS 140. The request and/or code may also include other information about the system including type and number of ICSs 140, type and number of industrial devices 141, customer, application, integrator, original manufacturer, original programmer, system characteristics, hardware component IDs, a code which includes information regarding the above, etc.

Licensing system 110 identifies or creates (420) an activation code (if any) capable of enabling the software. The identification or creation may be based on information received with the request, such as customer name, integrator name, serial number from the ICS, system or hardware characteristics, a combination of some of them or other information. The identification or creation may be validated versus the availability of licenses or activations for the particular user, location, company or such.

Once the activation code is identified or created, it may be communicated (430) to a user or device by the system. The code may then be used to enable the software.

Communication (430) can happen via email, text message, short message service, extended message service, multimedia message service, enhanced message service, test message service, and/or via a mobile or other telephone, and/or any other method or system, and/or combinations thereof.

Referring back to Figure 3, communication interface 311 may include communication connections and equipment that allows for communication with external systems and devices. Examples of communication interface 311 include network interface cards, wired interfaces, wireless interfaces, transceivers, antennas, power amplifiers, RF circuitry, optical networking equipment, and other present or future communication circuitry.

Processing system 312 may be implemented within a single processing device but may also be distributed across multiple processing devices or sub-systems that cooperate in executing program instructions. Examples of processing system 312 include general purpose central processing units, microprocessors, application specific processors, industrial control devices, and/or logic devices, as well as any other type of processing device.

Memory 313 may comprise any storage media readable by processing system 312 and capable of storing software. Memory 313 may include volatile and nonvolatile, removable and non-removable media implemented in any method or technology for storage of information, such as computer readable instructions, data structures, program modules, or other data. Memory 313 may be implemented as a single storage device but may also be implemented across multiple storage devices or sub-systems.

Memory 313 may comprise additional elements, such as a controller, capable of communicating with processing system 312. Examples of storage media include random access memory, read only memory, and flash memory, as well as any combination or variation thereof, or any other type of storage media. In some implementations, the storage media may be a non-transitory storage media. In some implementations, at least a portion of the storage media may be transitory. It should be understood that in no case is the storage media a propagated signal.

Software stored on or in memory 313 may comprise computer program instructions, firmware, or some other form of machine-readable processing instructions having processes that when executed by processing system 312 direct remote software enabling system 300 to operate as described herein.

The software may also include user software applications. The software may be implemented as a single application or as multiple applications. In general, the software may, when loaded into processing system 312 and executed, transform processing system 312 from a general-purpose device into a special-purpose device customized as described herein.

User interface 314 may have input devices such as a keyboard, a mouse, a voice input device, arrow up/down buttons, and/or a touch input device, and comparable input devices. Output devices such as a display, speakers, printer, and other types of output devices may also be included with user interface 314. User interface 314 may include a graphical user interface. User interface 314 may also be considered to be an integration of remote software enabling system 300 with software elements, such as operating system and application software.

Graphical user interface can include graphical and text-based user input elements, such as forms, slider bars, text boxes, buttons, radio buttons, check boxes, windows, icons, and pull-down menus, among other input elements, including combinations or variations thereof. Graphical user interface can be presented in a spreadsheet, interactive web page, discrete application, mobile phone app, tablet device app, windowing environment, or other graphical environments.

Example industrial automation systems and devices can include an operation or process implemented by a mechanical or electrical device. Examples of industrial automation devices include various functions of machinery associated with industrial automation including manufacturing equipment, assembly equipment, packaging equipment, milling equipment, or other machine systems, including combinations thereof.

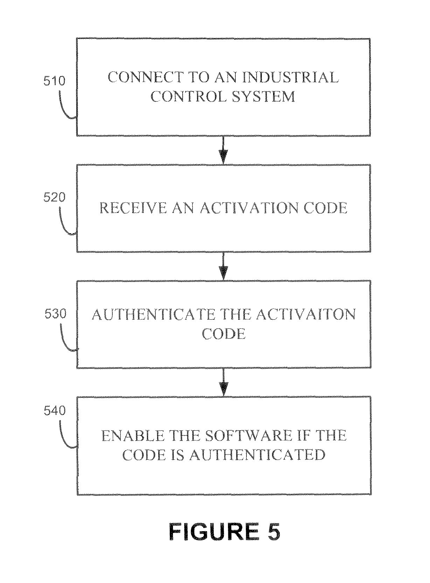

Figure 5 is a flow diagram illustrating a method of operation of programming system 130. Programming system 130 may connect to an industrial control system (510). Connecting may include communicatively coupling to the industrial control system to allow communications between them.

The method may also include generating a request code based on hardware or software characteristics of the industrial control system, or a combination thereof. This code may be sent along with the request to a licensing computer or system. The licensing system may then generate an activation code and communicate it back.

Programming system 130 is capable of receiving an activation code (520). Enablement code may then be authenticated (530). Authentication may include matching a code stored in the software and/or device, among other methods and systems for authenticating the code.

Once the code is authenticated, the software may be enabled/activated (540). The software may then be used to modify ICS 140. Alternatively the software may be authenticated and enabled on ICS 130, and the software may be used via a user interface of ICS 130.

The included descriptions and figures depict specific embodiments to teach those skilled in the art how to make and use the best mode. For the purpose of teaching inventive principles, some conventional aspects have been simplified or omitted. Those skilled in the art will appreciate variations from these embodiments that fall within the scope of this disclosure. Those skilled in the art will also appreciate that the features described above can be combined in various ways to form multiple embodiments. As a result, the invention is not limited to the specific embodiments described above, but only by the claims and their equivalents. The following is a list of further preferred embodiments of the invention:
Embodiment 1. A non-transitory computer readable medium having stored thereon program instructions executable by a computing device that, when executed by the computing device, direct the computing device to:
   receive a request for enabling use of software relating to an industrial control system;
   identify or generate an activation code capable of enabling the software based at least in part on the request; and
   communicate the activation code to a user to use to enable the software relating to the industrial control system.
Embodiment 2. The non-transitory computer readable medium of embodiment 1, wherein request comprises a code based at least in part on information relating to the industrial control system.
Embodiment 3. The non-transitory computer readable medium of embodiment 2, wherein the identifying is based at least in part on the information relating to the industrial control system.
Embodiment 4. The non-transitory computer readable medium of embodiment 3, wherein information comprises the type of industrial control system, a customer identification, a software identification, and/or a sequential code, and/or combinations thereof.
Embodiment 5. The non-transitory computer readable medium of embodiment 1, wherein the identifying or generating comprises comparing the received code with saved code(s) relating to the industrial control system, or generating the activation code.
Embodiment 6. The non-transitory computer readable medium of embodiment 1, wherein communicating comprises an email, text message, short message service, extended message service, multimedia message service, enhanced message service, test message service, and/or via a mobile or other telephone.
Embodiment 7. The non-transitory computer readable medium of embodiment 1, wherein the communicated activation code is capable of enabling the software for a predetermined time period.
Embodiment 8. The non-transitory computer readable medium of embodiment 1, wherein the industrial control system comprises a programmable logic controller(s), a variable frequency drive, and/or an industrial control device.
Embodiment 9. The non-transitory computer readable medium of embodiment 1, wherein the communicated activation code is capable of enabling the software for a predetermined number of uses, predetermined length of time, or provides limited functionality of the software.
Embodiment 10. A method of enabling software for an industrial control device, the method comprising:
   receiving a request for enabling use of software relating to an industrial control system;
   identifying a activation code capable of enabling the software based at least in part on the request; and
   communicating the activation code to a user to use to enable the software relating to the industrial control system.
Embodiment 11. The method of embodiment 10, wherein request comprises information relating to the industrial control system.
Embodiment 12. The method of embodiment 11, wherein the identifying is based at least in part on the information relating to the industrial control system.
Embodiment 13. The method of embodiment 12, wherein information comprises the type of industrial control system, a customer identification, a software identification, a user system identification, and/or a sequential code, and/or combinations thereof.
Embodiment 14. The method of embodiment 11, wherein the identifying comprises generating the activation.
Embodiment 15. The method of embodiment 11, wherein communicating comprises an email, text message, short message service, extended message service, multimedia message service, enhanced message service, test message service, and/or via a mobile or other telephone voice message.
Embodiment 16. The method of embodiment 11, wherein the industrial control system comprises a programmable logic controller, a variable frequency drive, and/or an industrial control device.
Embodiment 17. A non-transitory computer readable medium having stored thereon program instructions executable by a computing device coupled to an industrial control device that, when executed by the computing device, direct the computing device to:
   connect to an industrial control device;
   receive an activation code related to enabling software relating to the industrial control system;
   authenticate the activation code by the computing device; and
   enable software for use with the industrial control system based at least in part on the authentication of the activation code.
Embodiment 18. The industrial control device of embodiment 17, wherein the receiving comprises receiving the enablement code via one or more of an email, text message, short message service, and/or via a mobile or other telephone.
Embodiment 19. The non-transitory computer readable medium of embodiment 17, having further instructions to:
   generate a request code based on hardware or software characteristics or a combination thereof; and
   communicate the request code to a licensing system.
Embodiment 20. The industrial control device of embodiment 17, wherein the enabling comprises enabling the software for a finite period of time, or with limited functionality.

## Claims

1. A non-transitory computer readable medium having stored thereon program instructions executable by a computing device that, when executed by the computing device, direct the computing device to:
receive a request for enabling use of software relating to an industrial control system;
identify or generate an activation code capable of enabling the software based at least in part on the request; and
communicate the activation code to a user to use to enable the software relating to the industrial control system.

2. The non-transitory computer readable medium of Claim 1, wherein request comprises a code based at least in part on information relating to the industrial control system.

3. The non-transitory computer readable medium of Claim 2, wherein the identifying is based at least in part on the information relating to the industrial control system.

4. The non-transitory computer readable medium of Claim 3, wherein information comprises the type of industrial control system, a customer identification, a software identification, and/or a sequential code, and/or combinations thereof.

5. The non-transitory computer readable medium of any one of Claims 1 to 4, wherein the identifying or generating comprises comparing the received code with saved code(s) relating to the industrial control system, or generating the activation code.

6. The non-transitory computer readable medium of any one of Claims 1 to 5, wherein communicating comprises an email, text message, short message service, extended message service, multimedia message service, enhanced message service, test message service, and/or via a mobile or other telephone.

7. The non-transitory computer readable medium of any one of Claims 1 to 6, wherein the communicated activation code is capable of enabling the software for a predetermined time period; or
wherein the industrial control system comprises a programmable logic controller(s), a variable frequency drive, and/or an industrial control device.

8. The non-transitory computer readable medium of any one of Claims 1 to 7, wherein the communicated activation code is capable of enabling the software for a predetermined number of uses, predetermined length of time, or provides limited functionality of the software.

9. A method of enabling software for an industrial control device, the method comprising:
receiving a request for enabling use of software relating to an industrial control system;
identifying a activation code capable of enabling the software based at least in part on the request; and
communicating the activation code to a user to use to enable the software relating to the industrial control system.

10. The method of Claim 9, wherein request comprises information relating to the industrial control system; and/or
wherein the identifying is based at least in part on the information relating to the industrial control system; and/or
wherein information comprises the type of industrial control system, a customer identification, a software identification, a user system identification, and/or a sequential code, and/or combinations thereof.

11. The method of Claim 9 or 10, wherein the identifying comprises generating the activation.

12. The method of any one of Claims 9 to 11, wherein communicating comprises an email, text message, short message service, extended message service, multimedia message service, enhanced message service, test message service, and/or via a mobile or other telephone voice message.

13. The method of any one of Claims 9 to 12, wherein the industrial control system comprises a programmable logic controller, a variable frequency drive, and/or an industrial control device.

14. A non-transitory computer readable medium having stored thereon program instructions executable by a computing device coupled to an industrial control device that, when executed by the computing device, direct the computing device to:
connect to an industrial control device;
receive an activation code related to enabling software relating to the industrial control system;
authenticate the activation code by the computing device; and
enable software for use with the industrial control system based at least in part on the authentication of the activation code.

15. The industrial control device of Claim 14, wherein the receiving comprises receiving the enablement code via one or more of an email, text message, short message service, and/or via a mobile or other telephone; or
having further instructions to:
generate a request code based on hardware or software characteristics or a combination thereof; and
communicate the request code to a licensing system; or
wherein the enabling comprises enabling the software for a finite period of time, or with limited functionality.
